# EUROPEAN PATENT SPECIFICATION

(11) **EP 3 334 197 B1**
(45) Date of publication and mention of the grant of the patent: **15.01.2020**
(21) Application number: 15902562.6
(22) Date of filing: 31.08.2015
(51) Int. Cl.: H04W 8/24, H04W 88/02

(54) **METHOD AND SYSTEM FOR ACQUIRING IDENTIFICATION CODE OF TERMINAL**
VERFAHREN UND SYSTEM ZUR ERFASSUNG DES IDENTIFIZIERUNGSCODES EINER ENDGERÄTS
PROCÉDÉ ET SYSTÈME PERMETTANT D'ACQUÉRIR UN CODE D'IDENTIFICATION D'UN TERMINAL

(43) Date of publication of application: 13.06.2018
(73) Proprietor: Huawei Technologies Co., Ltd., Longgang District Shenzhen, Guangdong 518129 (CN)
(72) Inventor: ZHENG, Tao, Shenzhen Guangdong 518129 (CN)
(74) Representative: Gill Jennings & Every LLP
(86) International application number: PCT/CN2015/088647
(87) International publication number: WO 2017/035755

(56) References cited:
- CN-A- 101 137 244
- CN-A- 103 229 537
- CN-A- 104 468 260
- US-A1- 2009 115 614
- US-A1- 2010 100 876
- US-A1- 2012 271 979
- US-A1- 2014 327 523
- "3rd Generation Partnership Project; Technical Specification Group Services and System Aspects; International Mobile station Equipment Identities (IMEI) (Release 12)", 3GPP STANDARD ; TECHNICAL SPECIFICATION ; 3GPP TS 22.016, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V12.0.0, 3 October 2014 (2014-10-03), pages 1-8, XP051293963, [retrieved on 2014-10-03]

## Description

### TECHNICAL FIELD

The present invention relates to the communications field, and in particular, to a method and a device for obtaining an identifier of a terminal.

### BACKGROUND

Each terminal is assigned a globally unique identifier, such as an international mobile equipment identity (International Mobile Equipment Identity, IMEI), a mobile equipment identifier (Mobile Equipment Identifier, MEID), or a serial number (Series Number, SN). In the prior art, an identifier of a terminal is printed on the terminal, and then the identifier of the terminal may be obtained by using a scanning gun to scan the identifier printed on the terminal. However, the identifier is printed on the terminal in multiple manners, and each manner has its own disadvantages. Manner 1: The identifier is printed on a sticker, and then the sticker is pasted on the back of a battery of the terminal. However, the sticker needs to occupy relatively large space. For a terminal with an integrated body, there is no space for a sticker. Manner 2: The identifier is printed in a SIM card tray by means of lasering, causing various troubles to SIM card tray replacement. In addition, with use of increasingly smaller SIM card trays in terminals, there is no sufficient space in a SIM card tray for printing the identifier by means of lasering. Manner 3: The identifier is printed on the body of the terminal by means of lasering. However, this manner brings a great challenge to terminal manufacturing, and a terminal printed with so many words by means of lasering looks unbeautiful. Manner 4: The identifier is printed on a film. However, the film is prone to lose.
which an identifier of a terminal is printed on the terminal, and then the identifier of the terminal is obtained by using a scanning gun to scan the identifier printed on the terminal. Therefore, how to obtain an identifier of a terminal simply and quickly is an urgent issue to be addressed.

US2010100876 discloses systems and methods for provisioning a position monitoring device. The position monitoring device may include a wireless communication modem and a first serial port. A provisioning device may be coupled to the position monitoring device through a serial connection. The provisioning device can include a memory, a second serial port, and a processor. The provisioning device initiates an automatic configuration of the wireless communication modem through a series of attention commands.

### SUMMARY

The invention is defined in the independent claims. Embodiments of the invention are defined in the dependent claims.

In view of the above, embodiments of the present invention provide a method and a system for obtaining an identifier of a terminal, so as to obtain the identifier of the terminal simply and quickly.

According to a first aspect, it is provided a method in a system, wherein the system comprises a terminal and an identifier obtaining device, for obtaining an identifier of a terminal, including:, obtaining, by the terminal, an identifier of a processor of the terminal when the terminal is connected to an identifier obtaining device, or when the terminal receives an obtaining request sent by an identifier obtaining device; sending, by the terminal, the identifier of the processor to the identifier obtaining device; receiving, by the identifier obtaining device, the identifier of the processor; and obtaining, by the identifier obtaining device, the identifier of the terminal according to the identifier of the processor and a correspondence between the identifier of the processor and the identifier of the terminal. In this way, when the terminal detects that a trigger condition for obtaining the identifier of the processor is satisfied, the terminal obtains and sends the identifier of the processor, and then the identifier obtaining device can find the identifier of the terminal according to the identifier of the processor and the correspondence between the identifier of the processor and the identifier of the terminal, and can further obtain the identifier of the terminal. Therefore, the identifier of the terminal can be obtained simply and quickly.

The receiving an obtaining request sent by an identifier obtaining device may be specifically: receiving, by the terminal, by using a reserved pin of a connector of the terminal, the obtaining request sent by the identifier obtaining device. In this way, the identifier obtaining device needs only to encapsulate a very simple obtaining request, and the terminal needs only to parse the obtaining request according to a simple rule. Therefore, an overall scheme for obtaining the identifier of the terminal becomes very simple.

The sending the identifier of the processor to the identifier obtaining device is specifically: sending, by the terminal, the identifier of the processor to the identifier obtaining device by using the reserved pin of the connector of the terminal. In this way, the terminal device can encapsulate the identifier of the processor in a relatively simple encapsulation manner.

The processor may be a programmable processor or a micro control unit. Therefore, when the terminal cannot be powered on, but the programmable processor or a microprocessor can work normally, an identifier of the programmable processor or the microprocessor can still be obtained and sent. Then, the identifier obtaining device can find the identifier of the terminal according to the identifier of the processor and the correspondence between the identifier of the processor and the identifier of the terminal, and can further obtain the identifier of the terminal.

According to a second aspect, it is provided a system wherein the system comprises a terminal and an identifier obtaining device, wherein the terminal comprises a processor and a connector, wherein the processor of the terminal is configured to: obtain an identifier of the processor when the terminal is connected to an identifier obtaining device by using the connector, or when the terminal receives, by using the connector, an obtaining request sent by an identifier obtaining device; and
the processor of the terminal is further configured to send the identifier of the processor to the identifier obtaining device by using the connector;
the identifier obtaining device is configured to receive the identifier of the processor;
the identifier obtaining device is configured to obtain an identifier of the terminal according to the identifier of the processor and a correspondence between the identifier of the processor and the identifier of the terminal. In this way, after a trigger condition for obtaining the identifier of the terminal is satisfied, the identifier of the terminal is obtained automatically and sent, so that the identifier obtaining device can obtain the identifier of the terminal simply and quickly.

The processor of the terminal is configured to receive, by using the connector, the obtaining request sent by the identifier obtaining device is specifically: the processor of the terminal is configured to receive, by using a reserved pin of the connector, the obtaining request sent by the identifier obtaining device.. In this way, the identifier obtaining device needs only to encapsulate a very simple obtaining request, and the terminal needs only to parse the obtaining request according to a simple rule. Therefore, an overall scheme for obtaining the identifier of the terminal becomes very simple.

The processor of the terminal is configured to send the identifier of the processor to the identifier obtaining device by using the connector is specifically: the processor of the terminal is configured to send the identifier of the processor to the identifier obtaining device by using the reserved pin of the connector. In this way, the terminal can encapsulate the identifier of the terminal in a relatively simple encapsulation manner.

The processor of the terminal may be a programmable processor or a micro control unit. Therefore, when the terminal cannot be powered on, but the programmable processor or the micro control unit can work normally, the identifier of the terminal can still be obtained.

### BRIEF DESCRIPTION OF DRAWINGS

To describe the technical solutions in the embodiments of the present invention more clearly, the following briefly describes the accompanying drawings required for describing the embodiments.
FIG. 1 shows a method for obtaining an identifier of a terminal according to an embodiment of the present invention;
FIG. 2 is a front view of a USB type-C interface;
FIG. 3 shows another method for obtaining an identifier of a terminal according to an embodiment of the present invention;
FIG. 4 shows a method for obtaining an identifier of a terminal according to an an example useful for understanding the present invention;
FIG. 5 shows another method for obtaining an identifier of a terminal according to an example useful for understanding the present invention; and
FIG. 6 is a structural diagram of a terminal (only parts related to the present invention are shown) according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

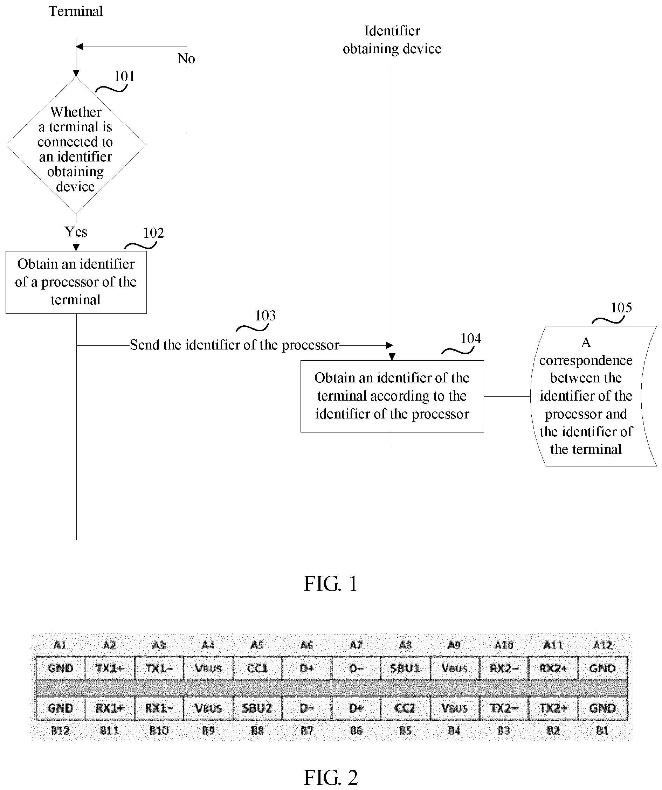

FIG. 1 shows a method for obtaining an identifier of a terminal according to an embodiment of the present invention. The method is applied to a terminal and an identifier obtaining device. The terminal includes a processor and a connector. The terminal is connected to the identifier obtaining device by using the connector. The identifier obtaining device may be any device independent of the terminal, for example, a notebook computer, a desk-top computer, or a terminal. The method includes the following steps.

Step 101: Determine whether the terminal is connected to the identifier obtaining device.

The processor of the terminal is an application processor (Application processor, AP), a programmable processor (Field Programmable Gate Array, FPGA), or a micro control unit (Microcontroller Unit, MCU). It should be noted that the application processor is different from the FPGA and the MCU. The application processor is a main processor of the terminal, and processes most control functions. A user may write some program code to the FPGA and the MCU, and functions of the program code may be executed when the FPGA or the MCU is running. The FPGA or the MCU may work independently of the application processor.

It should be noted that the processor has a unique identifier. For example, an identifier of the FPGA is known as a trace ID.

Generally, the terminal may be connected to the identifier obtaining device in multiple manners, for example, in a wired connection manner or in a wireless connection manner. In different connection manners, the terminal is connected to the identifier obtaining device by using different connectors. In a wired connection manner, a connector may be a USB connector. After the identifier obtaining device is connected to the terminal by using the USB connector, the terminal may detect a status change of a pin of the USB connector on the terminal, and may determine, according to the status change, that the identifier obtaining device is connected to the terminal.

The USB connector includes a variety of interface types, for example, a USB type-A interface, a USB type-B interface, and a USB type-C interface. The following uses the USB type-C interface as an example to describe use of a pin involved in this embodiment of the present invention. FIG. 2 shows a front view of the USB type-C interface. The USB type-C interface resolves a problem that it is very difficult to distinguish between a top side and a bottom side of a USB 2.0 interface or a USB 3.0 interface. Interfaces with a same arrangement structure are designed on a top side and a bottom side, so that a user can insert a USB connector freely, without a need to distinguish between a top side and a bottom side. It may be learned from FIG. 2 that the USB type-C interface includes a side A and a side B. Each side includes 1 to 12 pins, which are GND pins for grounding; TX+, TX-, RX+, RX-, D+, and D- pins for data sending and receiving, where the TX+ and TX- pins are used for a USB 3.0 interface, and the D+ and D- pins are used for a USB 2.0 interface; VBus pins for supplying power to a terminal; a CC pin for identifying a top side and a bottom side; and a reserved SBU pin. In this embodiment of the present invention, the reserved pin may be used as a pin for transmitting an obtaining request and an identifier of a terminal.

The terminal detects whether a status of a VBus pin is changed from an idle state to a connected state. If the status of the VBus pin is changed from an idle state to a connected state, the terminal and the identifier obtaining device are connected by using the connector. Alternatively, the terminal detects whether a status of an SBU pin is changed from an idle state to a connected state. If the status of the SBU pin is changed from an idle state to a connected state, the terminal and the identifier obtaining device are connected by using the connector.

It should be noted that in this embodiment of the present invention, a detection pin defined in the prior art may be used to detect whether the identifier obtaining device is connected to the terminal by using the connector. Alternatively, a new detection pin may be defined to detect whether the identifier obtaining device is connected to the terminal by using the connector. The newly-defined detection pin may be a reserved pin of the USB connector. For how to detect the detection pin, a detection method in the prior art may be used, and details are not described herein.

When the terminal is connected to the identifier obtaining device by using the connector, the terminal may start a subsequent operation. Such a manner is simple and easy, and does not need an additional operation. Therefore, user experience of a terminal can be enhanced effectively.

Step 102: When the terminal is connected to the identifier obtaining device, obtain an identifier of the processor of the terminal, where the identifier of the processor is stored in the terminal.

It should be noted that the processor is assigned a unique identifier before the terminal is delivered from a factory. That the identifier of the processor is stored in the terminal may be understood as that the identifier of the processor may be stored in a memory of the terminal, or may be written to the processor. If the identifier of the processor is stored in the memory, the identifier of the processor may be obtained only when the terminal can be powered on normally. If the identifier of the processor is stored in the processor, that is, an identifier of the FPGA or the MCU is stored in the processor, the identifier of the processor can be still obtained when the terminal cannot be powered on, but the FPGA or the MCU can run normally.

If the identifier of the processor is stored in the memory, the identifier is written to the memory of the terminal before the terminal is delivered from a factory, and the processor may obtain the identifier of the processor by reading data in the memory. If the identifier is written to the processor, and program code for obtaining the identifier is written to the processor, the identifier of the processor may be obtained by running the program code.

The terminal is assigned one or more identifiers before being delivered from a factory. A manufacturer stores a correspondence between the identifier of the processor and the identifier of the terminal.

It may be understood that the identifier of the terminal may be an international mobile equipment identity (International Mobile Equipment Identity, IMEI), a mobile equipment identifier (Mobile Equipment Identifier, MEID), or a serial number (Series Number, SN). Any identifier that can uniquely identify a terminal may be understood as the identifier of the terminal in this embodiment of the present invention.

Step 103: Send the identifier of the processor to the identifier obtaining device.

As described in the foregoing, the identifier of the processor may be transmitted between the terminal and the identifier obtaining device by using an existing data transmission pin and in an existing data transmission manner. Alternatively, the identifier obtaining device may send the identifier of the processor by using a reserved pin of a USB connector (for example, the terminal is connected to the identifier obtaining device by using the USB connector, where the USB connector may be a type-C connector).

Step 104: The identifier obtaining device obtains the identifier of the terminal according to the identifier of the processor and a correspondence between the identifier of the processor and the identifier of the terminal.

It should be noted that the correspondence between the identifier of the processor and the identifier of the terminal is a correspondence stored by a manufacturer of the terminal in a terminal manufacturing process. 105 in FIG. 1 is the correspondence between the identifier of the processor and the identifier of the terminal. The correspondence may be stored in a storage device of the identifier obtaining device, or may be stored in a storage device of a manufacturer or a seller of the terminal. In this case, the identifier obtaining device may be connected to the storage device of the manufacturer or the seller of the terminal, and search for the identifier of the terminal according to the identifier of the processor and the correspondence.

For example, the processor is an FPGA, an identifier of the FPGA is a trace ID, and the identifier of the terminal is an IMEI and an S/N. Table 1 is an example diagram of the correspondence between the identifier of the processor of the terminal and the identifier of the terminal. The identifier obtaining device searches, according to the trace ID, the correspondence for the IMEI and the S/N corresponding to the trace ID. For example, if the trace ID of the processor is 23456789012368, it can be obtained, by searching the correspondence, that the IMEI of the terminal is 1101722343440 and the S/N of the terminal is A9Q0114C25000096.

**Table 1**

| **Trace ID** | **IMEI** | **S/N** |
|---|---|---|
| 123456789012365 | 1101722343437 | A9Q0114C25000091 |
| 123456789012366 | 1101722343438 | A9Q0114C25000092 |
| 123456789012368 | 1101722343440 | A9Q0114C25000096 |
| ... | ... | ... |

It should be noted that after the identifier of the terminal is obtained, the identifier of the terminal may be further used. Using the identifier of the terminal may be specifically: displaying the identifier of the terminal, or sending the identifier of the terminal to another device, for example, a device of a maintenance department. Therefore, the device of the maintenance department may further determine, according to the identifier of the terminal, whether the terminal corresponding to the identifier of the terminal is a quality product.

According to the method for obtaining an identifier of a terminal provided in this embodiment of the present invention, when the terminal is connected to an identifier obtaining device, or receives an obtaining request sent by an identifier obtaining device, the terminal obtains an identifier of a processor, and sends the identifier of the processor to the identifier obtaining device; and the identifier obtaining device obtains the identifier of the terminal according to the identifier of the processor and a correspondence between the identifier of the processor and the identifier of the terminal. In this way, when the terminal detects that a trigger condition for obtaining the identifier of the processor is satisfied, the terminal obtains and sends the identifier of the processor, and then the identifier obtaining device can find the identifier of the terminal according to the identifier of the processor and the correspondence between the identifier of the processor and the identifier of the terminal. Therefore, the identifier of the terminal can be obtained simply and quickly.

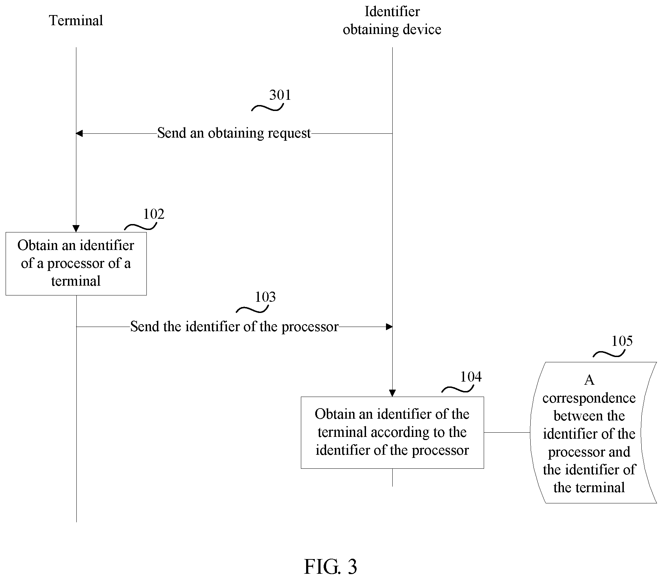

FIG. 3 shows a method for obtaining an identifier of a terminal according to another embodiment of the present invention. This embodiment is implemented based on the embodiment shown in FIG. 1. Only differences from FIG. 1 are described in this embodiment. For the same part as that in FIG. 1, refer to description in FIG. 1. Details are not repeated herein.

Step 101 may be step 301, that is, an identifier obtaining device sends an obtaining request to the terminal, where the obtaining request is used to obtain an identifier of a processor.

It should be noted that when the identifier obtaining device is connected to the terminal, the identifier obtaining device may send the obtaining request to the terminal, or an "obtain" button may be displayed on the identifier obtaining device, and when the "obtain" button is pressed, the identifier obtaining device may send the obtaining request to the terminal.

It should be noted that the obtaining request may be transmitted between the terminal and the identifier obtaining device by using an existing data transmission pin and in an existing data transmission manner. First, the identifier obtaining device encapsulates the obtaining request. Then, after receiving the obtaining request, the terminal parses the obtaining request. The identifier obtaining device may send the obtaining request by using a reserved pin of a USB connector. For example, the identifier obtaining device may encapsulate a 1-byte obtaining request, such as 1. The 1-byte obtaining request is received from the reserved pin, and the reserved pin is configured to receive the obtaining request. Therefore, when content parsed from the content received from the reserved pin is 1, it may be determined that the terminal has received the obtaining request.

In this way, the terminal can start a subsequent operation only after receiving the obtaining request. This achieves higher accuracy and saves resources of the terminal.

In the prior art, a user may obtain the identifier of the terminal by entering "*#06#" on the terminal. However, a premise of this manner is that the terminal can be powered on normally, that is, an application processor works normally. If the terminal cannot work normally, the identifier of the terminal cannot be obtained in this manner. In this embodiment of the present invention, when the processor is an FPGA or an MCU, the problem can be resolved properly. The reason is that the FPGA or the MCU is a processor that can run independently of the application processor of the terminal. Even if the application processor of the terminal cannot work normally, the FPGA or the MCU can still work normally. In addition, when power of the terminal is exhausted, and there is another device being connected to the terminal, the FPGA or the MCU can use a power supply pin of the another device to supply power. In this way, a function of this embodiment of the present invention can be further implemented, that is, an identifier of the FPGA or the MCU is sent.

According to the method for obtaining an identifier of a terminal provided in this embodiment of the present invention, when receiving an obtaining request sent by an identifier obtaining device, the terminal obtains an identifier of a processor of the terminal, and sends the identifier of the processor to the identifier obtaining device; and the identifier of the terminal is obtained according to the identifier of the processor and a correspondence between the identifier of the processor and the identifier of the terminal. In this way, when the terminal detects that a trigger condition for obtaining the identifier is satisfied, the terminal obtains and sends the identifier of the processor, and then the identifier obtaining device can find the identifier of the terminal according to the identifier of the processor and the correspondence between the identifier of the processor and the identifier of the terminal, and can further obtain the identifier of the terminal. Therefore, the identifier of the terminal can be obtained simply and quickly.

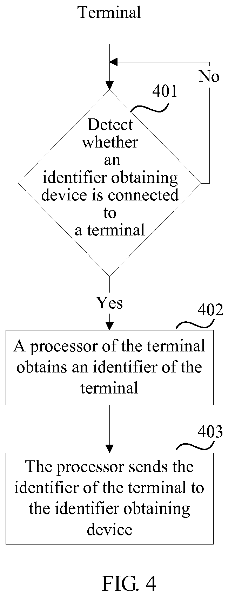

FIG. 4 shows a method for obtaining an identifier of a terminal according to an example useful for understanding the present invention. The terminal includes a processor and a connector. The terminal is connected to an identifier obtaining device by using the connector. The processor is an application processor, a programmable processor, or a micro control unit.

Step 401: Detect whether the identifier obtaining device is connected to the terminal.

For a specific detection method, refer to related description in FIG. 1. Details are not repeated herein.

Step 402: When the identifier obtaining device is connected to the terminal, the processor of the terminal obtains the identifier of the terminal.

For a manner of obtaining the identifier of the terminal, refer to the manner of obtaining the identifier of the processor of the terminal in FIG. 1. Details are not repeated herein.

Step 403: The processor sends the identifier of the terminal to the identifier obtaining device.

In this example, it is detected whether a terminal is connected to an identifier obtaining device; and when the terminal is connected to the identifier obtaining device, an identifier of the terminal is obtained, and the identifier of the terminal is sent to the identifier obtaining device. In this way, when it is detected that a trigger condition for obtaining the identifier of the terminal is satisfied, the identifier of the terminal is obtained automatically and sent, so that the identifier obtaining device can obtain the identifier of the terminal simply and quickly.

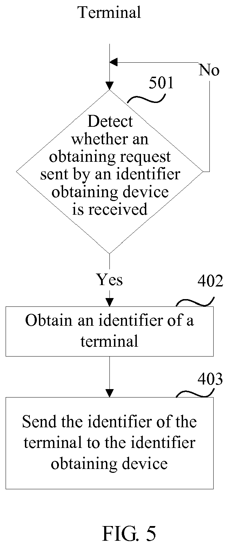

FIG. 5 shows a method for obtaining an identifier of a terminal according to an an example useful for understanding the present invention. This example is implemented based on the example shown in FIG. 4. Only a design different from that in FIG. 4 is described in this embodiment. For the same design as that in FIG. 4, refer to description in FIG. 4. Details are not repeated herein.

Step 401 may be step 501, that is, it is determined whether an obtaining request sent by an identifier obtaining device is received, where the obtaining request is used to obtain the identifier of the terminal.

For sending of the obtaining request, refer to description in FIG. 3. Details are not repeated herein.

In this way, the terminal can start a subsequent operation only after receiving the obtaining request. This achieves higher accuracy and saves resources of the terminal.

In this example, when receiving an obtaining request sent by an identifier obtaining device, a terminal obtains an identifier of the terminal, and sends the identifier of the terminal to the identifier obtaining device. In this way, when it is detected that a trigger condition for obtaining the identifier of the terminal is satisfied, the identifier of the terminal is obtained automatically and sent, so that the identifier obtaining device can obtain the identifier of the terminal.

An embodiment of the present invention provides a terminal. The terminal includes a processor and a connector. The processor is an application processor, a programmable processor, or a micro control unit.

The processor is configured to: when the terminal is connected to an identifier obtaining device by using the connector, or receives, by using the connector, an obtaining request sent by an identifier obtaining device, obtain an identifier of the processor, where the obtaining request is used to obtain the identifier of the processor.

The processor is further configured to send the identifier of the processor to the identifier obtaining device by using the connector, so that the identifier obtaining device obtains an identifier of the terminal according to the identifier of the processor and a correspondence between the identifier of the processor and the identifier of the terminal.

Optionally, that the processor is configured to receive, by using the connector, the obtaining request sent by the identifier obtaining device is specifically: the processor is configured to receive, by using a reserved pin of the connector, the obtaining request sent by the identifier obtaining device.

That the processor is configured to send the identifier of the processor to the identifier obtaining device by using the connector is specifically: the processor is configured to send the identifier of the processor to the identifier obtaining device by using the reserved pin of the connector.

It should be noted that the terminal may be configured to execute the methods described in FIG. 1 and FIG. 3. For related content, refer to description of the methods. Details are not repeated herein.

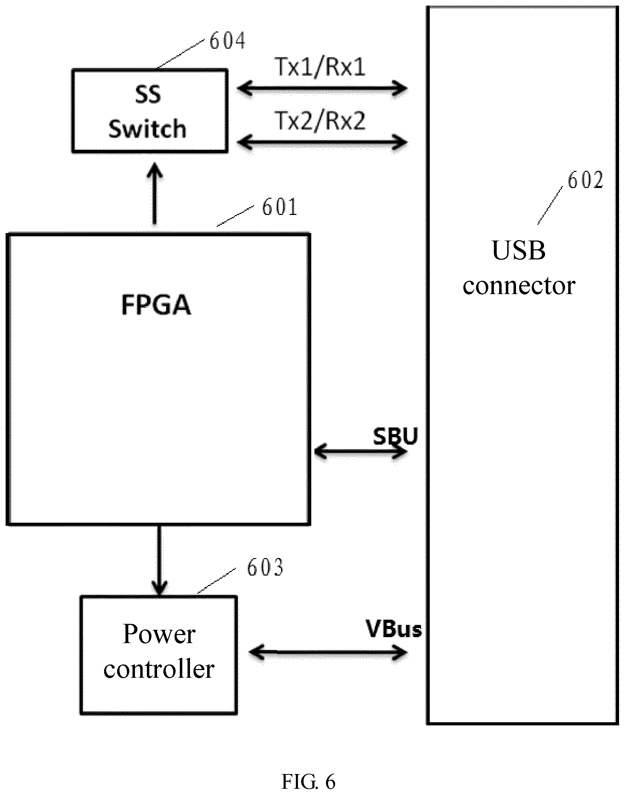

To describe specific implementation of this embodiment of the present invention more clearly, the following describes a connection relationship between the processor and a USB connector and a data transmission procedure by using an example in which the processor is a programmable processor FPGA and the connector is a USB connector. FIG. 6 is a structural diagram of a terminal (only parts related to the present invention are shown) according to an embodiment of the present invention. The terminal includes an FPGA 601, a USB connector 602, a power controller 603, and an SS switch 604. A VBus pin is a charging pin of the FPGA 601. Power may be supplied to the FPGA 601 by using the VBus pin. The SS switch 604 controls, according to an instruction of the FPGA 601, to use a TX1/RX1 or TX2/RX2 pin to transmit data. Details about how the FPGA 601 controls SS switch switching have been described in the prior art, and are not described herein.

The FPGA 601 continuously detects whether an SBU pin of the USB connector 602 is changed from an idle state to a connected state. If the SBU pin of the USB connector 602 is changed from an idle state to a connected state, the FPGA 601 detects a circuit change on the SBU pin, and therefore it can be determined that there is another device being connected to the USB connector, and then program code written to the FPGA 601 runs automatically. By running the program code, an identifier of the FPGA 601 can be obtained, and the identifier can be sent by using the USB connector. The identifier may be sent by using the SBU pin or a TX pin of the USB connector.

The FPGA 601 continuously detects whether there is a message sent by another device. The message may be received from the SBU pin or an RX pin. If the message request is received, the FPGA 601 parses the message according to a preset rule. If the message is received from the SBU pin, the preset rule may be very simple because the SBU pin is a dedicated pin with a single function. If the message is received from the RX pin, the preset rule needs to be more complex than the foregoing manner. If the parsed message is an obtaining request, the program code written to the FPGA runs automatically. By running the program code, the identifier of the FPGA 601 can be obtained, and the identifier can be sent by using the USB connector 602. The identifier may be sent by using the SBU pin or the TX pin of the USB connector.

This embodiment of the present invention may be implemented in other manners, which are not enumerated herein.

According to the terminal provided in this embodiment of the present invention, when the terminal is connected to an identifier obtaining device or receives an obtaining request sent by an identifier obtaining device, the terminal obtains an identifier of a processor, and sends the identifier of the processor to the identifier obtaining device. In this way, when the terminal detects that a trigger condition for obtaining an identifier is satisfied, the terminal obtains and sends the identifier of the processor, so that the identifier obtaining device finds an identifier of the terminal according to the identifier of the processor and a correspondence between the identifier of the processor and the identifier of the terminal, and can further obtain the identifier of the terminal. Therefore, the identifier of the terminal can be obtained simply and quickly.

An embodiment of the present invention provides an identifier obtaining device. The identifier obtaining device includes a connector and a first processor.

The first processor is configured to receive, by using the connector, an identifier of a second processor sent by a terminal. The first processor is further configured to obtain an identifier of the terminal according to the identifier of the second processor and a correspondence between the identifier of the second processor and the identifier of the terminal.

Optionally, the first processor is further configured to send an obtaining request to the terminal by using the connector, where the obtaining request is used to obtain the identifier of the second processor.

It should be noted that the terminal may be configured to execute the foregoing methods. For related content, refer to description of the methods. Details are not repeated herein.

The identifier obtaining device provided in this embodiment of the present invention receives an identifier of a second processor sent by a terminal, and obtains an identifier of the terminal according to the identifier of the second processor and a correspondence between the identifier of the second processor and the identifier of the terminal. Therefore, the identifier obtaining device can work with the terminal to obtain the identifier of the terminal.

An example useful for understanding the present invention provides another terminal. The terminal includes a processor and a connector. The terminal is connected to an identifier obtaining device by using the connector. The processor is an application processor, a programmable processor, or a micro control unit.

The processor is configured to: when the terminal is connected to the identifier obtaining device by using the connector, or receives an obtaining request sent by the identifier obtaining device, obtain an identifier of the terminal, where the obtaining request is used to obtain the identifier of the terminal.

The processor is further configured to send the identifier of the terminal to the identifier obtaining device by using the connector.

Optionally, that the processor is configured to receive the obtaining request sent by the identifier obtaining device is specifically: the processor is configured to receive, by using a reserved pin of the connector of the terminal, the obtaining request sent by the identifier obtaining device.

That the processor is configured to send the identifier of the terminal to the identifier obtaining device is specifically: the processor is configured to send the identifier of the terminal to the identifier obtaining device by using the reserved pin of the connector of the terminal.

It should be noted that the terminal may be configured to execute the methods described in FIG. 4 and FIG. 5. For related content, refer to description of the methods. Details are not repeated herein.

In this example useful for understanding the present invention, when the terminal is connected to an identifier obtaining device by using a connector, or receives an obtaining request sent by an identifier obtaining device, the terminal obtains an identifier of the terminal, and sends the identifier of the terminal to the identifier obtaining device by using the connector. In this way, when it is detected that a trigger condition for obtaining the identifier of the terminal is satisfied, the identifier of the terminal is obtained automatically and sent, so that the identifier obtaining device can obtain the identifier of the terminal simply and quickly.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

## Claims

1. A method executed in a system, wherein the system comprises a terminal and an identifier obtaining device, for obtaining an identifier of a terminal, wherein the method comprises:
obtaining (Step 102), by the terminal, an identifier of a processor of the terminal when the terminal is connected to the identifier obtaining device, or when the terminal receives an obtaining request sent by the identifier obtaining device, wherein the obtaining request is used to obtain the identifier of the processor; and
sending (Step 103), by the terminal, the identifier of the processor to the identifier obtaining device;
receiving, by the identifier obtaining device, the identifier of the processor;
obtaining (Step 104), by the identifier obtaining device, the identifier of the terminal according to the identifier of the processor and a correspondence between the identifier of the processor and the identifier of the terminal.

2. The method according to claim 1, wherein the receiving an obtaining request sent by the identifier obtaining device is specifically:
receiving, by the terminal, by using a reserved pin of a connector of the terminal, the obtaining request sent by the identifier obtaining device.

3. The method according to claim 1 or 2, wherein the sending, by the terminal, the identifier of the processor to the identifier obtaining device is specifically: sending, by the terminal, the identifier of the processor to the identifier obtaining device by using the reserved pin of the connector of the terminal.

4. The method according to any one of claims 1 to 3, wherein the processor is an application processor, a programmable processor, or a micro control unit.

5. A system wherein the system comprises a terminal and an identifier obtaining device, wherein the terminal comprises a processor and a connector, wherein
the processor of the terminal is configured to:, obtain an identifier of the processor when the terminal is connected to an identifier obtaining device by using the connector, or when the terminal receives, by using the connector, an obtaining request sent by an identifier obtaining device; and
the processor of the terminal is further configured to send the identifier of the processor to the identifier obtaining device by using the connector;
the identifier obtaining device is configured to receive the identifier of the processor; the identifier obtaining device is configured to obtain an identifier of the terminal according to the identifier of the processor and a correspondence between the identifier of the processor and the identifier of the terminal.

6. The system according to claim 5, wherein that the processor of the terminal is configured to receive, by using the connector, the obtaining request sent by the identifier obtaining device is specifically:
the processor of the terminal is configured to receive, by using a reserved pin of the connector, the obtaining request sent by the identifier obtaining device.

7. The system according to claim 5 or 6, wherein that the processor of the terminal is configured to send the identifier of the processor to the identifier obtaining device by using the connector is specifically: the processor of the terminal is configured to send the identifier of the processor to the identifier obtaining device by using the reserved pin of the connector.

8. The system according to any one of claims 5 to 7, wherein the processor of the terminal is an application processor, a programmable processor, or a micro control unit.

## Patentansprüche

1. Verfahren, das in einem System ausgeführt wird, wobei das System ein Endgerät und eine Kennungserhaltungsvorrichtung umfasst, um eine Kennung eines Endgeräts zu erhalten, wobei das Verfahren Folgendes umfasst:
Erhalten (Schritt 102), durch das Endgerät, einer Kennung eines Prozessors des Endgeräts, wenn das Endgerät mit der Kennungserhaltungsvorrichtung verbunden ist, oder wenn das Endgerät eine Erhaltungsanforderung empfängt, die durch die Kennungserhaltungsvorrichtung gesendet wird, wobei die Erhaltungsanforderung verwendet wird, um die Kennung des Prozessors zu erhalten; und
Senden (Schritt 103), durch das Endgerät, der Kennung des Prozessors an die Kennungserhaltungsvorrichtung;
Empfangen, durch die Kennungserhaltungsvorrichtung, der Kennung des Prozessors;
Erhalten (Schritt 104), durch die Kennungserhaltungsvorrichtung, der Kennung des Endgeräts gemäß der Kennung des Prozessors und einer Entsprechung zwischen der Kennung des Prozessors und der Kennung des Endgeräts.

2. Verfahren nach Anspruch 1, wobei das Empfangen einer Erhaltungsanforderung, die durch die Kennungserhaltungsvorrichtung gesendet wird, insbesondere Folgendes ist:
Empfangen, durch das Endgerät, indem ein reservierter Pin eines Anschlusses des Endgeräts verwendet wird, der Erhaltungsanforderung, die durch die Kennungserhaltungsvorrichtung gesendet wird.

3. Verfahren nach Anspruch 1 oder 2, wobei das Senden, durch das Endgerät, der Kennung des Prozessors an die Kennungserhaltungsvorrichtung insbesondere Folgendes ist: Senden, durch das Endgerät, der Kennung des Prozessors an die Kennungserhaltungsvorrichtung, indem der reservierte Pin des Anschlusses des Endgeräts verwendet wird.

4. Verfahren nach einem der Ansprüche 1 bis 3, wobei der Prozessor ein Anwendungsprozessor, ein programmierbarer Prozessor oder eine Mikrosteuereinheit ist.

5. System, wobei das System ein Endgerät und eine Kennungserhaltungsvorrichtung umfasst, wobei das Endgerät einen Prozessor und einen Anschluss umfasst, wobei der Prozessor des Endgeräts für Folgendes konfiguriert ist:
Erhalten einer Kennung des Prozessors, wenn das Endgerät mit einer Kennungserhaltungsvorrichtung verbunden ist, indem der Anschluss verwendet wird, oder wenn das Endgerät, indem der Anschluss verwendet wird, eine Erhaltungsanforderung empfängt, die durch eine Kennungserhaltungsvorrichtung gesendet wird; und
der Prozessor des Endgeräts ferner konfiguriert ist, um die Kennung des Prozessors an die Kennungserhaltungsvorrichtung zu senden, indem der Anschluss verwendet wird;
die Kennungserhaltungsvorrichtung konfiguriert ist, um die Kennung des Prozessors zu empfangen;
die Kennungserhaltungsvorrichtung konfiguriert ist, um eine Kennung des Endgeräts gemäß der Kennung des Prozessors und einer Entsprechung zwischen der Kennung des Prozessors und der Kennung des Endgeräts zu erhalten.

6. System nach Anspruch 5, wobei, dass der Prozessor des Endgeräts konfiguriert ist, um, indem der Anschluss verwendet wird, die Erhaltungsanforderung zu empfangen, die durch die Kennungserhaltungsvorrichtung gesendet wird, insbesondere Folgendes ist:
der Prozessor des Endgeräts ist konfiguriert, um, indem ein reservierter Pin des Anschlusses verwendet wird, die Erhaltungsanforderung zu empfangen, die durch die Kennungserhaltungsvorrichtung gesendet wird.

7. System nach Anspruch 5 oder 6, wobei, dass der Prozessor des Endgeräts konfiguriert ist, um die Kennung des Prozessors an die Kennungserhaltungsvorrichtung zu senden, indem der Anschluss verwendet wird, insbesondere Folgendes ist: der Prozessor des Endgeräts ist konfiguriert, um die Kennung des Prozessors an die Kennungserhaltungsvorrichtung zu senden, indem der reservierte Pin des Anschlusses verwendet wird.

8. System nach einem der Ansprüche 5 bis 7, wobei der Prozessor des Endgeräts ein Anwendungsprozessor, ein programmierbarer Prozessor oder eine Mikrosteuereinheit ist.

## Revendications

1. Procédé exécuté dans un système, dans lequel le système comprend un terminal et un dispositif d'obtention d'identifiant, pour l'obtention d'un identifiant d'un terminal, dans lequel le procédé comprend :
l'obtention (étape 102), par le terminal, d'un identifiant d'un processeur du terminal lorsque le terminal est connecté au dispositif d'obtention d'identifiant, ou lorsque le terminal reçoit une requête d'obtention envoyée par le dispositif d'obtention d'identifiant, dans lequel la requête d'obtention est utilisée pour obtenir l'identifiant du processeur ; et
l'envoi (étape 103), par le terminal, de l'identifiant du processeur au dispositif d'obtention d'identifiant ;
la réception, par le dispositif d'obtention d'identifiant, de l'identifiant du processeur ;
l'obtention (étape 104), par le dispositif d'obtention d'identifiant, de l'identifiant du terminal selon l'identifiant du processeur et une correspondance entre l'identifiant du processeur et l'identifiant du terminal.

2. Procédé selon la revendication 1, dans lequel la réception d'une requête d'obtention envoyée par le dispositif d'obtention d'identifiant est spécifiquement :
la réception, par le terminal, en utilisant une broche réservée d'un connecteur du terminal, de la requête d'obtention envoyée par le dispositif d'obtention d'identifiant.

3. Procédé selon la revendication 1 ou 2, dans lequel l'envoi, par le terminal, de l'identifiant du processeur au dispositif d'obtention d'identifiant est spécifiquement : l'envoi, par le terminal, de l'identifiant du processeur au dispositif d'obtention d'identifiant en utilisant la broche réservée du connecteur du terminal.

4. Procédé selon l'une quelconque des revendications 1 à 3, dans lequel le processeur est un processeur d'application, un processeur programmable, ou une unité de micro-commande.

5. Système dans lequel le système comprend un terminal et un dispositif d'obtention d'identifiant, dans lequel le terminal comprend un processeur et un connecteur, dans lequel
le processeur du terminal est conçu pour : obtenir un identifiant du processeur lorsque le terminal est connecté à un dispositif d'obtention d'identifiant en utilisant le connecteur, ou lorsque le terminal reçoit, en utilisant le connecteur, une requête d'obtention envoyée par un dispositif d'obtention d'identifiant ; et
le processeur du terminal est conçu en outre pour envoyer l'identifiant du processeur au dispositif d'obtention d'identifiant en utilisant le connecteur ;
le dispositif d'obtention d'identifiant est conçu pour recevoir l'identifiant du processeur ;
le dispositif d'obtention d'identifiant est conçu pour obtenir un identifiant du terminal selon l'identifiant du processeur et une correspondance entre l'identifiant du processeur et l'identifiant du terminal.

6. Système selon la revendication 5, dans lequel le fait que le processeur du terminal est conçu pour recevoir, en utilisant le connecteur, la requête d'obtention envoyée par le dispositif d'obtention d'identifiant est spécifiquement :
le processeur du terminal est conçu pour recevoir, en utilisant une broche réservée du connecteur, la requête d'obtention envoyée par le dispositif d'obtention d'identifiant.

7. Système selon la revendication 5 ou 6, dans lequel le fait que le processeur du terminal est conçu pour envoyer l'identifiant du processeur au dispositif d'obtention d'identifiant en utilisant le connecteur est spécifiquement : le processeur du terminal est conçu pour envoyer l'identifiant du processeur au dispositif d'obtention d'identifiant en utilisant la broche réservée du connecteur.

8. Système selon l'une quelconque des revendications 5 à 7, dans lequel le processeur du terminal est un processeur d'application, un processeur programmable, ou une unité de micro-commande.
